# EUROPEAN PATENT APPLICATION

(11) **EP 3 316 205 A1**
(43) Date of publication of application: **02.05.2018**
(21) Application number: 16814190.1
(22) Date of filing: 10.06.2016
(51) Int. Cl.: G06Q 40/02, G06Q 20/16

(54) **METHOD AND SYSTEM FOR CONSOLIDATING LIABILITIES OF DEBTOR AND IMPROVING COMPOSITION OF FINANCES IN BATCH FACTORING TRANSACTIONS BY MEANS OF ELECTRONIC RECORDED MONETARY CLAIMS**

(30) Priority: 23.06.2015 JP 2015125443
(71) Applicant: Tranzax Co., Ltd., Tokyo 105-0001 (JP)
(72) Inventor: OGURA, Takashi, Tokyo 102-0093 (JP); FUKAZAWA, Ryoichi, Sakura-shi Chiba 285-0045 (JP)
(74) Representative: K & H Bonapat Patentanwälte Koch · von Behren & Partner mbB
(86) International application number: PCT/JP2016/067345
(87) International publication number: WO 2016/208419

(57) **Abstract**

There are provided a method and a system capable of reducing a debt and improving a financial condition of a debtor in a batch factoring transaction by an electronically-recorded monetary claim

An ordering company terminal (1), an FP terminal (3), a supplying company terminal (2), and an electronic-monetary-claim recording institution (C) are connected through the internet to a bridge service (A) having a factoring function to a supplying company, and factoring management means of the bridge service (A) performs data management of a monetary claim ledger, a discount statement, monetary claim transfer, and the like through the FP terminal (3) based on monetary claim statement data transmitted from the ordering company terminal (1).

## Description

### Technical Field

The present invention relates to a method and a system for reducing a debt and improving a financial condition of an ordering company by providing a structure of purchasing and selling electronically-recorded monetary claims between the ordering company and a factoring company in a batch factoring transaction by electronically-recorded monetary claims using an internet communication and a computer system.

### Background Art

Currently available electronically-recorded monetary claims are mainly electronized paper bills. Electronically-recorded monetary claims in batch factoring transactions are also available, but which is limited only to offering benefit of early capitalization by prepayment to a supplying company and reduction of payment work labor to an ordering company similarly to conventional batch factoring transactions in which electronically-recorded monetary claims are not used. In batch factoring transactions by electronically-recorded monetary claims, a factoring company prepays an electronically-recorded monetary claim of an original creditor based on the request of a supplying company, the supplying company thereby acquires the discounted electronically-recorded monetary claim, and then the factoring company collects the monetary claim from an ordering company through settlement of the electronically-recorded monetary claim on the due date. In this case, the supplying company obtains the benefit of early capitalization of the monetary claim by the prepayment, and the factoring company obtains the profit equivalent to the discount amount by the prepayment. In addition, the ordering company can integrate due date payments to the factoring company, and obtain the effect of reduction of the payment work labor.

With respect to the above electronically-recorded monetary claims, there is a technique which is, for example, a method and system for managing the bankrupt of a borrower using the electronically-recorded monetary claims as disclosed in Patent Literature 1. The technique is capable of collectively distraining all existing electronically-recorded monetary claims the bank settlement accounts of which are regarded as creditor's accounts when a business partner (borrower) is bankrupt, of automatically transferring and distraining newly generated electronically-recorded monetary claims by registering bankrupt information, and of reducing clerical procedures and post-management related to which.

With respect to the discount of an electronically-recorded monetary claim, there is a technique which is a system and method for automatically determining whether an electronically-recorded monetary claim is discounted based on the creditworthiness of both the payment company "original debtor" and the discount requesting client of the electronically-recorded monetary claim as disclosed in Patent Literature 2. Since it is determined that the electronically-recorded monetary claim is discounted based on the allowable maximum amount of the original debtor and the discount maximum amount of the discount requesting client, it is possible to automatically quickly determine whether the electronically-recorded monetary claim is discounted taking into consideration the creditworthiness of both the original debtor and the discount requesting client.

### Citation List

### Patent Literature

Patent Literature 1: JP 5663626 B2
Patent Literature 2: JP 5362867 B2

### Summary of Invention

### Technical Problem

As described above, in widely performed batch factoring transactions by electronically-recorded monetary claims, it is true that an ordering company merely obtains the effect of reduction of payment work labor for a supplying company. For this reason, it is also true that many ordering companies think that the introduction effect is not sufficient, and are unwilling to introduce batch factoring transactions. Furthermore, since the profits equivalent to the discount amount obtained through batch factoring transactions are monopolized by factoring companies or financial institutions performing back finance, the profits are never directly returned to ordering companies.

As described above, the purpose of Patent Literature 1 is to register bankrupt information, and the purpose of Patent Literature 2 is merely to automatically determine whether an electronically-recorded monetary claim is discounted.

Thus, the present invention has been created in view of the various circumstances as described above, and is to provide a method and system for reducing a debt and improving a financial condition of a debtor in a batch factoring transaction by an electronically-recorded monetary claim which enables an ordering company to directly obtain the effect of improving a financial condition by providing a financial transaction in which electronically-recorded monetary claims are sold and purchased between a factoring company and the ordering company separately from a batch factoring transaction, and further prompts ordering companies which think that the introduction effect is not sufficient and are unwilling to introduce batch factoring transactions to introduce the batch factoring transactions.

### Solution to Problem

In order to solve the above problem, a system for reducing a debt and improving a financial condition of a debtor in a batch factoring transaction by an electronically-recorded monetary claim, the system including:
a bridge service terminal having a business function of the batch factoring transaction by the electronically-recorded monetary claim, the bridge service terminal being connected to an ordering company terminal, a factoring company terminal, a supplying company terminal, and an electronic-monetary-claim recording institution terminal through an internet, characterized in that
the bridge service terminal includes factoring management means for performing processing including:
   data management of a monetary claim ledger, a discount statement, monetary claim transfer through the factoring company terminal based on monetary claim statement data transmitted from the ordering company terminal;
   transmission of generation record/transfer record request data to the electronic-monetary-claim recording institution terminal;
   record of an electronic record number and an electronic record date on the monetary claim ledger based on a record result notification transmitted from the electronic-monetary-claim recording institution terminal; and
   creation of transfer data according to an application for prepayment received from a supplying company and generation of an accounting slip based on a discounted acquisition value,
   the ordering company terminal, the factoring company terminal, and the electronic-monetary-claim recording institution terminal are enabled to transmit and receive data by a WEB: I/F function unit of the bridge service terminal,
   the bridge service terminal includes monetary claim transfer management means for performing processing including:
   transmission of a monetary claim purchase application from the factoring company terminal to the ordering company terminal;
   transmission of a monetary claim purchase acceptance notification from the ordering company terminal to the factoring company terminal;
   performing execution processing of monetary claim transfer from the factoring company terminal and generation of an accounting slip based on a discounted transfer value at the same time;
   transmission of transfer record/payment record request data to the electronic-monetary-claim recording institution terminal; and
   extinguishment of an electronically-recorded debt of an ordering company on the monetary claim ledger based on the record result notification transmitted from the electronic-monetary-claim recording institution terminal and transmission of a monetary claim extinguishment notification to the ordering company terminal, and
   the supplying company terminal transmits a prepayment application to a Fax: I/F function unit of the bridge service terminal from a date when an account receivable is fixed and the electronically-recorded monetary claim is recorded so as to enable capitalization before a due date.

Furthermore, a method for reducing debt and improving a financial condition of a debtor in a batch factoring transaction by an electronically-recorded monetary claim, the method being for a system in which a bridge service terminal having a business function of the batch factoring transaction by the electronically-recorded monetary claim is connected to an ordering company terminal, a factoring company terminal, a supplying company terminal, and an electronic-monetary-claim recording institution terminal through an internet, the method characterized by including:
performing, by the bridge service terminal, factoring management processing including the steps of:
performing data management of a monetary claim ledger, a discount statement, monetary claim transfer through the factoring company terminal based on monetary claim statement data transmitted from the ordering company terminal;
transmitting generation record/transfer record request data to an electronic-monetary-claim recording institution;
recording an electronic record number and an electronic record date on the monetary claim ledger based on a record result notification transmitted from the electronic-monetary-claim recording institution; and
creating transfer data according to an application for prepayment received from a supplying company and generating of an accounting slip based on a discounted acquisition value, wherein
the ordering company terminal, the factoring company terminal, and the electronic-monetary-claim recording institution terminal are enabled to transmit and receive data by a WEB: I/F function unit of the bridge service terminal,
the data management of the monetary claim transfer by the bridge service terminal includes the steps of:
   transmitting a monetary claim purchase application from the factoring company terminal to the ordering company terminal;
   transmitting a monetary claim purchase acceptance notification from the ordering company terminal to the factoring company terminal;
   performing execution processing of monetary claim transfer from the factoring company terminal and generating an accounting slip based on a discounted transfer value;
   transmitting transfer record/payment record request data to the electronic-monetary-claim recording institution terminal; and
   extinguishing an electronically-recorded debt of an ordering company on the monetary claim ledger based on the record result notification transmitted from the electronic-monetary-claim recording institution terminal and transmitting a monetary claim extinguishment notification to the ordering company terminal, and
   the supplying company terminal transmits a prepayment application to a Fax: I/F function unit of the bridge service terminal from a date when an account receivable is fixed and an electronically-recorded monetary claim is recorded so as to enable capitalization before a due date.

According to the above configuration, in a bridge service having a business function of a batch factoring transaction by an electronically-recorded monetary claim, there are provided a function of applying for purchase of an electronically-recorded monetary claim from a factoring company to an ordering company, a function of creating transfer record/payment record request data of the electronically-recorded monetary claim by the factoring company according to purchase acceptance and the payment of the purchase price from the ordering company, a function of creating and transmitting a monetary claim extinguishment notification from the factoring company to the ordering company according to a record result notification from a recording institution, and a function of updating and managing a monetary claim balance and an electronic record date in a series of processing.

### Advantageous Effects of Invention

According to the present invention, by purchasing (discounted-transferring), from a factoring company, a discounted electronically-recorded monetary claim acquired by the factoring company from a supplying company without waiting for the payment due date and extinguishing an electronically-recorded debt by mixing a creditor and a debtor, it is possible for an ordering company to extinguish the electronically-recorded monetary claim before the due date and to streamline the balance sheet. In addition, it is possible for the ordering company to obtain a margin between a face price and a discounted acquisition value as a profit according to the purchase of the electronically-recorded monetary claim, and to obtain financial revenue without any credit risk. By combining the above two effects, it is possible for the ordering company to obtain the improving effect of financial indexes such as the ROA, sales profit ratio, and capital adequacy ratio.

### Brief Description of Drawings

Fig. 1 is a configuration diagram conceptually showing a system outline of operational factoring according to an embodiment to implement the present invention.
Fig. 2 is a table showing items and content examples of ordering company information stored in a master file.
Fig. 3 is a table showing items and content examples of supplying company information stored in a master file.
Fig. 4 is a table showing items and content examples of affiliation contract information stored in a master file.
Fig. 5 is a table showing items and content examples of a monetary claim ledger file stored in a master file.
Fig. 6 is a table showing items and content examples of a discount statement file stored in a master file.
Fig. 7 is a table showing items and content examples of a monetary claim transfer management file stored in a master file.
Fig. 8 is a diagram explaining an outline of business processing of operational factoring.
Fig. 9 is a diagram explaining a procedure until an electronically-recorded monetary claim is generated.
Fig. 10 is a diagram explaining a procedure of prepayment.
Fig. 11 is a diagram explaining a procedure from prepayment to monetary claim purchase/monetary claim extinguishment.

### Description of Embodiments

Hereinafter, with reference to the drawings, a system for a batch factoring transaction by an electronically-recorded monetary claim according to an embodiment of the present invention will be described in detail.

### [First Embodiment]

### <Overall configuration of system>

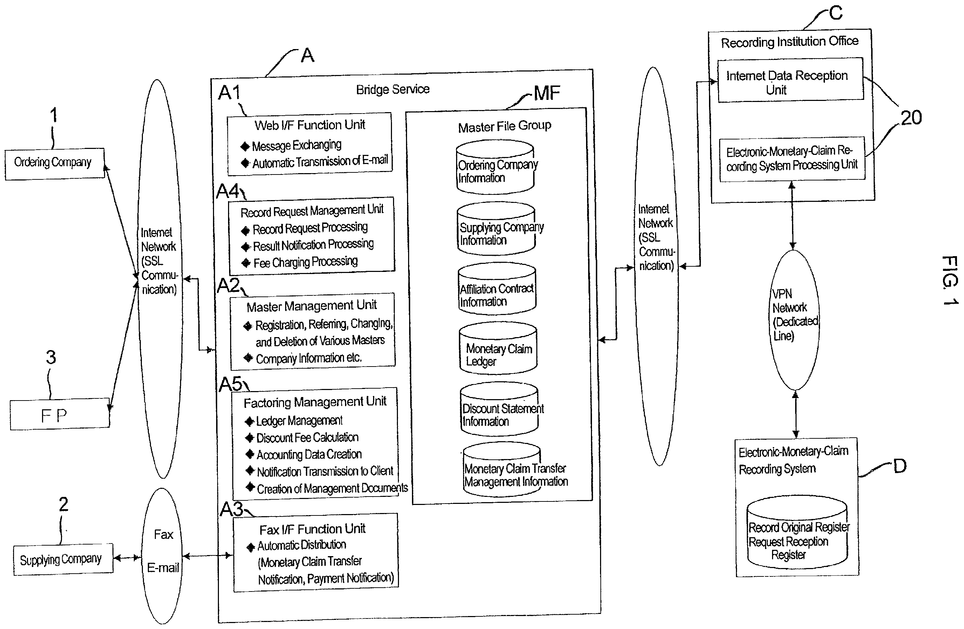

Fig. 1 shows an overall configuration of a financing improvement system using an electronically-recorded monetary claim. In the present embodiment, an ordering company terminal 1, a supplying company terminal 2, an FP terminal 3, and an institution terminal 20 of an electronic-monetary-claim recording institution C are connected to a bridge service terminal A having an operational factoring function to a supplying company through an internet with, for example, an SSL communication network or the like, and the supplying company terminal 2 is capable of transmitting/receiving e-mails and facsimiles to/from the FP terminal 3 by a Fax: I/F function A3 which will be described later. Here, the term FP is an abbreviation of a factoring company.

### <System configuration of bridge service>

In the drawing, the bridge service terminal A includes a factoring management unit A5 (factoring management means), which will be described later, having a factoring function (a financial service for purchasing an account receivable owned by another person and collecting the monetary claim) in which record request data is created by a record request management unit A4 based on monetary claim statement data transmitted from the ordering company terminal 1, and is transmitted to the institution terminal 20 of the electronic-monetary-claim recording institution C by a bridge service message exchanging function.

As shown in Fig. 1, the bridge service terminal A includes a WEB: I/F function A1, a master management unit A2, a Fax: I/F function A3, a record request management unit A4, a factoring management unit A5 (factoring function: purchasing an account receivable owned by another person and collecting the monetary claim), and a master file group MF. The WEB: I/F function A1 is for exchanging messages and automatically transmitting e-mails. The master management unit A2 registers, refers to, changes, and deletes various masters, and manages company information and the like. The Fax: I/F function A3 is for performing automatic distribution of a monetary claim transfer notification and payment notification. The record request management unit A4 performs processing such as a record request, result notification, and fee charging. The factoring management unit A5 performs ledger management, discount fee calculation, accounting data creation, notification transmission to clients, and creation of various management documents. The master file group MF includes various information databases such as an ordering company file, a supplying company file, an affiliation contract file, a monetary claim ledger file, a discount statement file, and a monetary claim transfer management file.

The WEB: I/F function A1 is connected to the ordering company terminal 1, the bridge service terminal A, and the institution terminal 20 of the electronic-monetary-claim recording institution C through an SSL communication network (internet), and the Fax: I/F function A3 is connected to the supplying company terminal 2 through facsimiles or e-mails. The electronic-monetary-claim recording institution C is connected to the bridge service terminal A through an SSL communication network (internet).

The master file group MF records items and contents of ordering company information, supplying company information, affiliation contract information, a monetary claim ledger file, a discount statement file, and a monetary claim transfer management file in the order of item number.

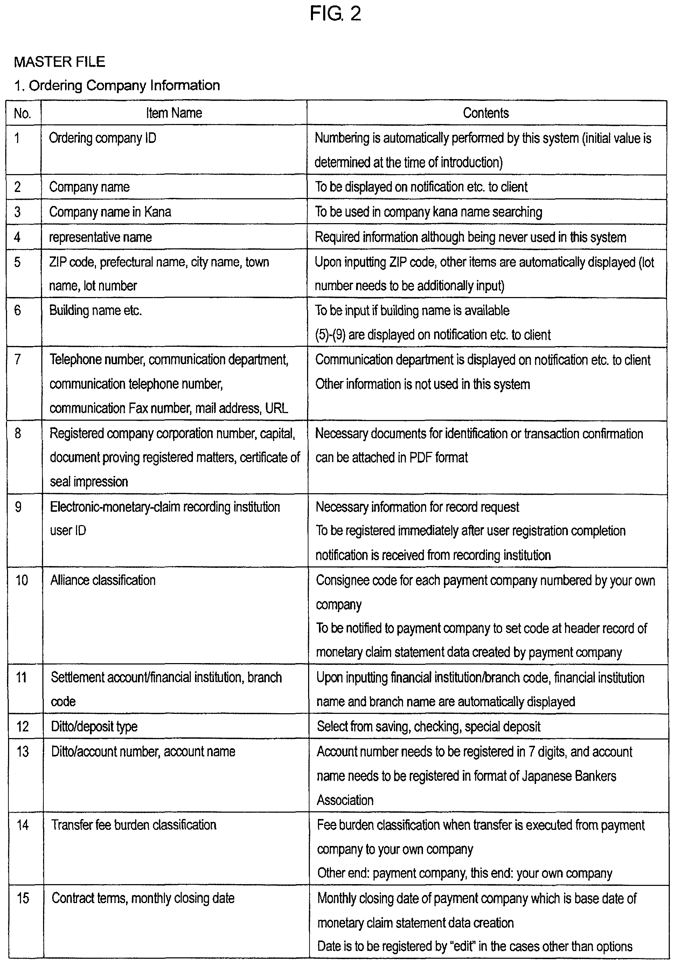

As shown in Fig. 2, the ordering company information includes the item names and the contents of an ordering company ID, a company name, a representative name, a location, communication information such as a telephone number, a mail address, and a URL, identification information such as registered company corporation number, a capital, a document proving registered matters, and a certificate of a seal impression, an electronic-monetary-claim recording institution user ID, an alliance classification, a settlement account, contract terms which are the base date of monetary claim statement data creation, and the like.

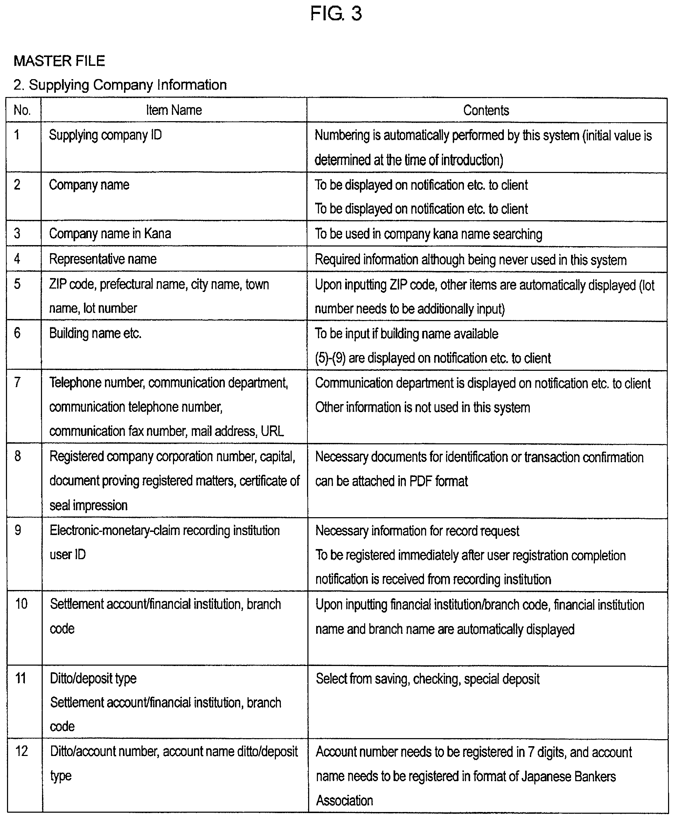

As shown in Fig. 3, the supplying company information includes the item names and the contents of a supplying company ID, a company name, a representative name, a location, communication information such as a telephone number, a mail address, and a URL, identification information such as registered company corporation number, a capital, a document proving registered matters, and a certificate of a seal impression, an electronic-monetary-claim recording institution user ID, a settlement account, and the like.

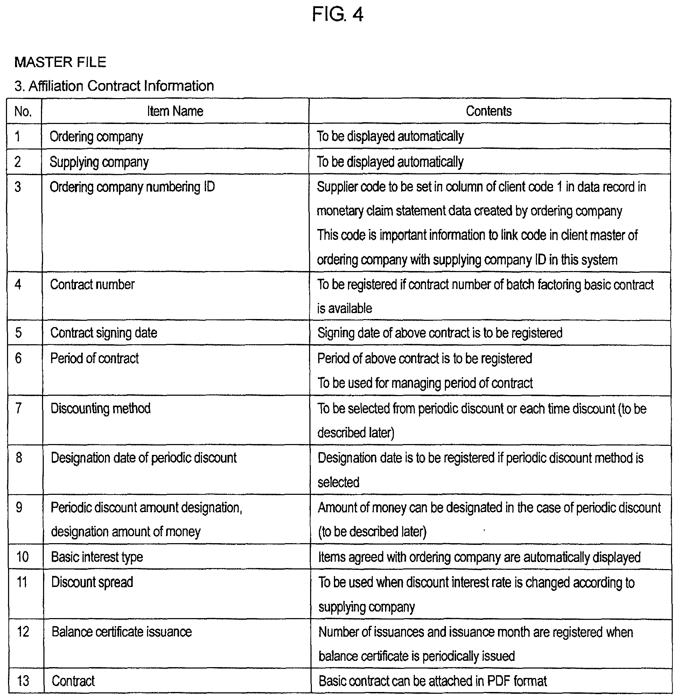

As shown in Fig. 4, the affiliation contract information includes the item names and the contents of automatic display of an ordering company and a supplying company, an ordering company numbering ID, a contract number, a contract signing date, a period of contract, a discounting method, a designation date of periodic discount, a designation amount of money, a basic interest type, a balance certificate, and the like.

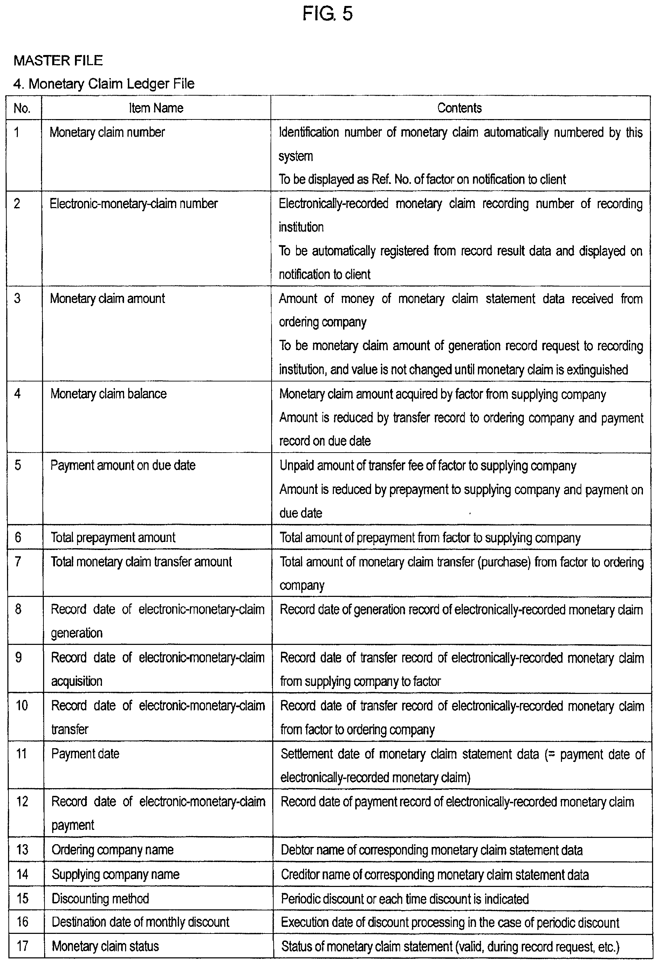

As shown in Fig. 5, the monetary claim ledger file includes the item names and the contents of a monetary claim number, an electronic-monetary-claim number, a monetary claim amount, a monetary claim balance, a payment amount on a due date, a total prepayment amount, a total monetary claim transfer amount, a record date of electronic-monetary-claim generation, a record date of electronic-monetary-claim acquisition, a record date of electronic-monetary-claim transfer, a payment date, a record date of electronic-monetary-claim payment, an ordering company name, a supplying company name, a discounting method, and the like.

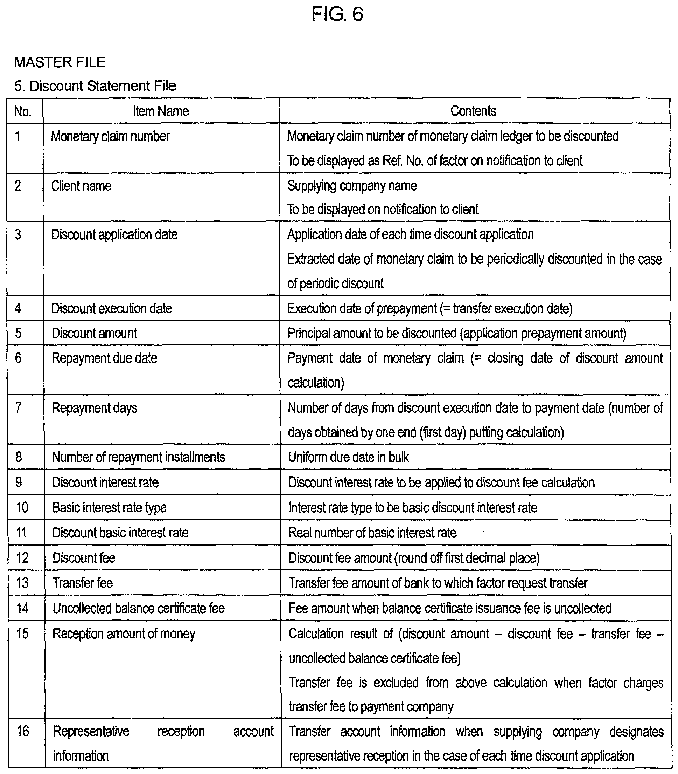

As shown in Fig. 6, the discount statement file includes the item names and the contents of a monetary claim number, a client name, a discount application date, a discount execution date, a discount amount, a repayment due date, repayment days, the number of repayment installments, a discount interest rate, a basic interest rate type, a discount basic interest rate, a discount fee, a reception amount of money, and the like.

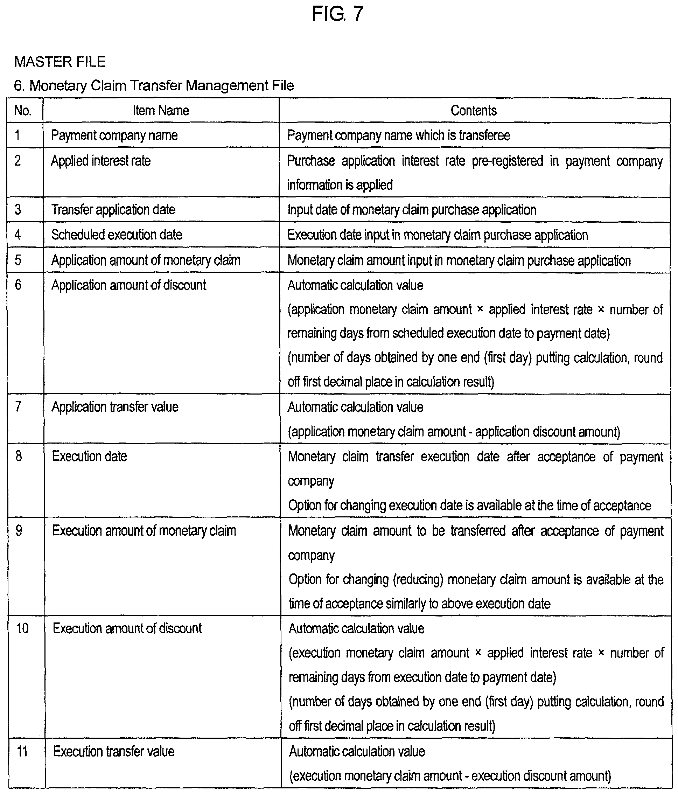

As shown in Fig. 7, the monetary claim transfer management file includes the item names and the contents of a payment company name, an applied interest rate, a transfer application date, a scheduled execution date, an application amount of monetary claim, an application amount of discount, an application transfer value, an execution date, an execution amount of monetary claim, an execution amount of discount, an execution transfer value, and the like.

Next, an operation of a system for reducing a debt and improving a financial condition of a debtor in a batch factoring transaction by an electronically-recorded monetary claim in the above structure will be described.

The ordering company terminal 1 accesses the bridge service terminal A and transmits monetary claim statement data by the bridge service message exchanging function.

The bridge service terminal A creates record request data based on the monetary claim statement data at the record request management unit A4 and transmits the data to the institution terminal 20 of the electronic-monetary-claim recording institution C by the bridge service message exchanging function.

The institution terminal 20 of the electronic-monetary-claim recording institution C creates record result data by inputting the record request data to an electronic-monetary-claim recording system D and registering the data as request/record information.

The record result data is transmitted from the institution terminal 20 of the electronic-monetary-claim recording institution C to the bridge service terminal A by the bridge service message exchanging function.

As the procedure order of prepayment (discount), first, the supplying company 2 applies for a discount to the bridge service terminal A. The bridge service terminal A receives the application for prepayment from the supplying company 2, creates transfer data, records a discounted acquisition value on the monetary claim ledger, and generates an accounting slip.

The bridge service terminal A further notifies the supplying company 2 before the due date.

The FP terminal 3 performs transmission of the fund transfer to the bridge service terminal A.

In this manner, the supplying company terminal 2 transmits a prepayment application to the Fax: I/F functioning unit A3 of the bridge service terminal A from the day when the account receivable is fixed and the electronically-recorded monetary claim is recorded, and it is thereby possible to enable capitalization before the due date.

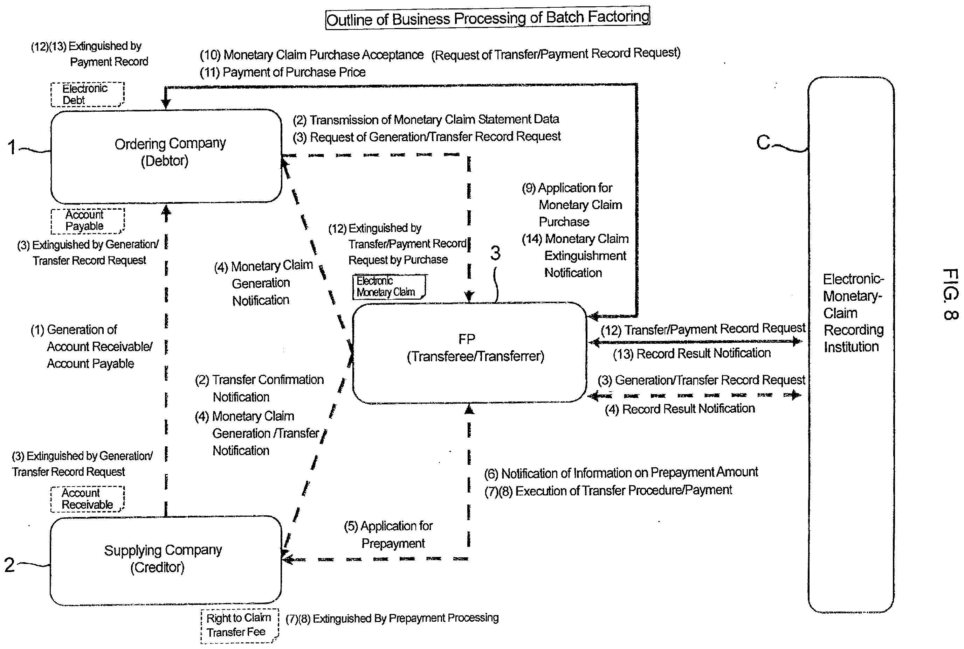

Next, with reference to Fig. 8, a summary of a procedure of business (practical) processing of batch factoring in the above structure will be described.

First, as shown in Fig. 8, the supplying company (terminal 2) which is a creditor generates an account receivable and an account payable to the ordering company (terminal 1) which is a debtor. At this time, the account receivable of the supplying company 2 and the account payable of the ordering company 1 are extinguished by a generation/transfer record request. The ordering company 1 transmits the monetary claim statement data and the generation/transfer record request to the FP terminal 3 (a factor performs factoring business) which is the transferee/transferrer. The FP terminal 3 transmits a transfer generation notification to the ordering company 1, and transmits a transfer confirmation notification and a monetary claim generation/transfer notification to the supplying company 2 at the same time. The supplying company 2 applies for prepayment to the FP terminal 3, and the FP terminal 3 notifies the supplying company 2 of the information on the prepayment amount and executes the transfer procedure/payment. The FP terminal 3 executes the generation/transfer record request to the electronic-monetary-claim recording institution C, and then the electronic-monetary-claim recording institution C transmits a record result notification to the FP terminal 3.

As shown in Fig. 8, the FP terminal 3 applies for monetary claim purchase to the ordering company 1. The ordering company 1 requests monetary claim purchase acceptance and a transfer/payment record request to the FP terminal 3. The ordering company 1 pays the purchase price to the FP terminal 3. The FP terminal 3 executes a transfer/payment record request to the electronic-monetary-claim recording institution C. The electronic-monetary-claim recording institution C transmits a transfer/payment record result notification to the FP terminal 3. The electronically-recorded monetary claim of the ordering company is extinguished by the payment record in this record result notification. The FP terminal 3 transmits a monetary claim extinguishment notification to the ordering company 1.

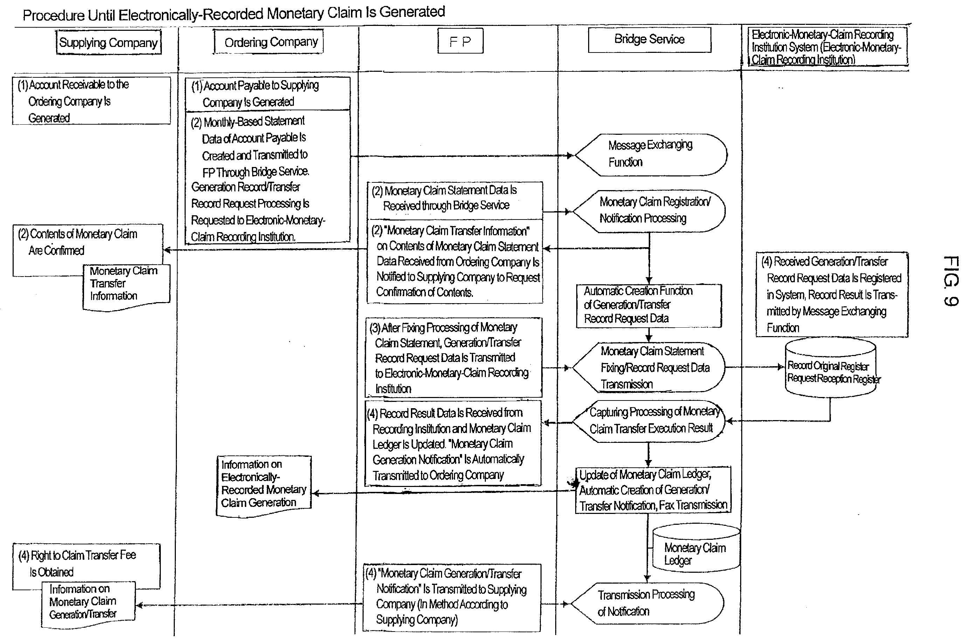

Next, with reference to Fig. 9, the detailed procedure until the electronically-recorded monetary claim is generated will be explained. First, an account receivable is generated at the supplying company (the above supplying company terminal 2) to the ordering company, and an account payable is generated at the ordering company 1 to the supplying company 2 at the same time.

The ordering company 1 creates monthly-based statement data of the account payable and transmits the data to the FP terminal 3 through the bridge service terminal A. The ordering company 1 further requests generation record/transfer record request processing to the electronic-monetary-claim recording institution C.

The FP terminal 3 receives the monetary claim statement data through the bridge service terminal A, notifies the supplying company of "monetary claim transfer information" on the contents of the monetary claim statement data received from the ordering company, and requests confirmation of the contents. After the fixing processing of the monetary claim statement, the FP terminal 3 transmits the generation/transfer record request data to the electronic-monetary-claim recording institution C through the bridge service terminal A, and records the data in the record original register and the request reception register.

The electronic-monetary-claim recording institution C registers the generation/transfer record request data received from the bridge service terminal A in the system and transmits the record result to the FP terminal 3 through the bridge service terminal A by the message exchanging function.

The FP terminal 3 updates the monetary claim ledger file of the master file group MF based on the record result data received from the electronic-monetary-claim recording institution C. At the same time, the FP terminal 3 automatically transmits a "monetary claim generation notification" (information on electronically-recorded monetary claim generation) to the ordering company 1.

The bridge service terminal A further transmits, based on the monetary claim ledger file of the master file group MF, a monetary claim generation/transfer notification (information on monetary claim generation/transfer) to the supplying company in a method according to the supplying company. In other words, automatic distribution of a monetary claim transfer notification, a payment notification, or the like is performed by the Fax: I/F function A3.

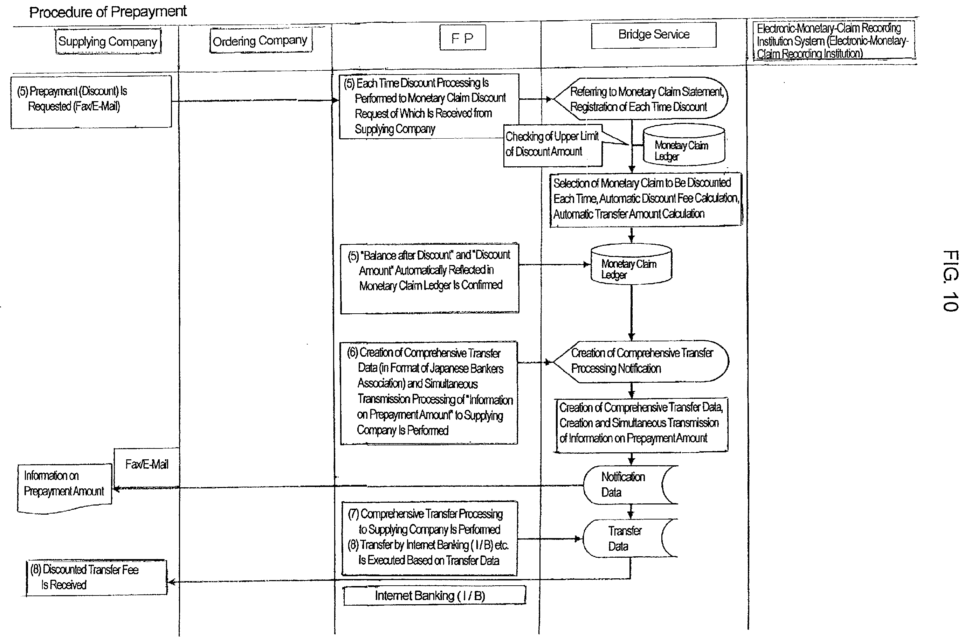

Next, with reference to Fig. 10, the detailed procedure of prepayment will be described. First, the supplying company 2 requests prepayment (discount) to the FP terminal 3. The FP terminal 3 performs each time discount processing to the monetary claim the discount request of which is received from the supplying company 2. The FP terminal 3 refers to the monetary claim statement and performs selection and discount registration of the monetary claim to be discounted each time. As a result, the bridge service terminal A checks the upper limit of the transaction amount in the monetary claim ledger file of the master file group MF, performs automatic discount fee calculation/automatic transfer amount calculation processing, and updates the balance after the discount and the discount amount of the monetary claim ledger.

The FP terminal 3 confirms "the balance after the discount" and "the discount amount" automatically reflected in the monetary claim ledger file of the master file group MF of the bridge service terminal A. The FP terminal 3 further performs creation of comprehensive transfer data (in the format of the Japanese Bankers Association) and simultaneous transmission processing of "information on prepayment amount" to the supplying company 2.

Further, the FP terminal 3 performs comprehensive transfer processing to the supplying company 2, and executes transfer by the internet banking (I/B) or the like based on the transfer data. As a result, the supplying company 2 obtains the amount of money from which the transfer fee is discounted.

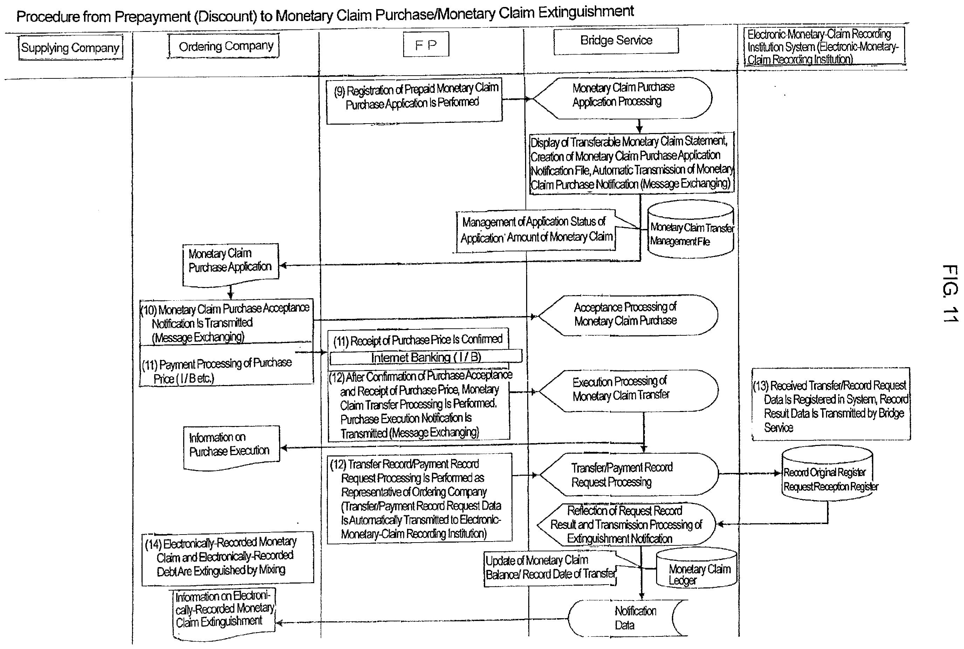

Next, with reference to Fig. 11, the detailed procedure of monetary claim purchase/debt extinguishment after prepayment will be described. First, the FP terminal 3 performs registration of a prepaid monetary claim purchase application. The bridge service terminal A performs, based on the monetary claim purchase application processing, display of a transferable monetary claim statement, creation of a monetary claim purchase application notification file, and automatic transmission of a monetary claim purchase notification by the message exchanging function.

The bridge service terminal A further manages the application status of the application amount of the monetary claim recorded in the monetary claim transfer management file of the master file group MF. Then, the ordering company 1 obtains the application for the monetary claim purchase through the bridge service terminal A, and the ordering company 1 performs transmission of a monetary claim purchase acceptance notification by the message exchanging function and purchase price payment processing by the internet banking (I/B) or the like

After the confirmation of the purchase acceptance by the bridge service terminal A and receipt of purchase price by the internet banking (I/B), the FP terminal 3 performs the monetary claim transfer processing and transmits a monetary claim purchase execution notification (information on purchase execution) to the ordering company 1 by the message exchanging function.

The FP terminal 3 causes the bridge service terminal A to perform transfer record/payment record request processing as a representative of the ordering company 1. Then, the processed transfer/payment record request data is automatically transmitted to the electronic-monetary-claim recording institution C. The electronic-monetary-claim recording institution C transmits the received transfer/payment record request data to the electronic-monetary-claim recording system D through a VPN network and registers the data in the system.

The registered record result data is transmitted to the bridge service terminal A by the message exchanging function of the bridge service terminal A. After the bridge service terminal A performs the reception processing of the record result data and confirms the record result data, the FP terminal 3 performs the reflection processing of the record result data in the monetary claim ledger file of the master file group MF, and a monetary claim extinguishment notification (information on electronically-recorded monetary claim extinguishment) is automatically transmitted to the ordering company 1 at the same time.

As described above, a batch factoring transaction by an electronically-recorded monetary claim has already been provided mainly to bank factoring companies (FP) and the like. However, the ordering company 1 has merely obtained the effect of reduction of the payment work labor for the account payable to the supplying company 2 in the batch factoring. Thus, in the present invention, by purchasing (discounted acquisition), from the factoring company, a discounted electronically-recorded monetary claim acquired by the factoring company from the supplying company 2 without waiting for the payment due date and extinguishing an electronically-recorded debt by mixing a creditor and a debtor, it is possible for the ordering company 1 to extinguish the electronically-recorded monetary claim before the due date and to streamline the balance sheet. In addition, it is possible for the ordering company 1 to obtain a margin between a face price and a discounted acquisition value as a profit according to the purchase of the electronically-recorded monetary claim, and to obtain financial revenue without any credit risk. By combining the above two effects, it is possible for the ordering company 1 to obtain the improving effect of financial indexes such as the ROA, sales profit ratio, and capital adequacy ratio.

### Reference Signs List

- A: Bridge service terminal
- A1: WEB: I/F function
- A2: Master management unit
- A3: Fax: I/F function
- A4: Record request management unit
- A5: Factoring management unit
- C: Electronic-monetary-claim recording institution
- MF: Master file group
- D: Electronic-monetary-claim recording system
- 1: Ordering company terminal
- 2: Supplying company terminal
- 3: FP terminal
- 20: Institution terminal

## Claims

1. A system for reducing a debt and improving a financial condition of a debtor in a batch factoring transaction by an electronically-recorded monetary claim, the system comprising:
a bridge service terminal having a business function of the batch factoring transaction by the electronically-recorded monetary claim, the bridge service terminal being connected to an ordering company terminal (1), a factoring company terminal, a supplying company terminal (2), and an electronic-monetary-claim recording institution terminal through an internet, **characterized in that**
the bridge service terminal includes factoring management means for performing processing including:
data management of a monetary claim ledger, a discount statement, monetary claim transfer through the factoring company terminal based on monetary claim statement data transmitted from the ordering company terminal (1);
transmission of generation record/transfer record request data to the electronic-monetary-claim recording institution terminal;
record of an electronic record number and an electronic record date on the monetary claim ledger based on a record result notification transmitted from the electronic-monetary-claim recording institution terminal; and
creation of transfer data according to an application for prepayment received from a supplying company and generation of an accounting slip based on a discounted acquisition value,
the ordering company terminal (1), the factoring company terminal, and the electronic-monetary-claim recording institution terminal are enabled to transmit and receive data by a WEB: I/F function unit of the bridge service terminal,
the bridge service terminal includes monetary claim transfer management means for performing processing including:
transmission of a monetary claim purchase application from the factoring company terminal to the ordering company terminal (1);
transmission of a monetary claim purchase acceptance notification from the ordering company terminal (1) to the factoring company terminal;
performing execution processing of monetary claim transfer from the factoring company terminal and generation of an accounting slip based on a discounted transfer value at the same time;
transmission of transfer record/payment record request data to the electronic-monetary-claim recording institution terminal; and
extinguishment of an electronically-recorded debt of an ordering company on the monetary claim ledger based on the record result notification transmitted from the electronic-monetary-claim recording institution terminal and transmission of a monetary claim extinguishment notification to the ordering company terminal (1), and
the supplying company terminal (2) transmits a prepayment application to a Fax: I/F function unit of the bridge service terminal from a date when an account receivable is fixed and the electronically-recorded monetary claim is recorded so as to enable capitalization before a due date.

2. A method for reducing debt and improving a financial condition of a debtor in a batch factoring transaction by an electronically-recorded monetary claim, the method being for a system in which a bridge service terminal (A) having a business function of the batch factoring transaction by the electronically-recorded monetary claim is connected to an ordering company terminal (1), a factoring company terminal, a supplying company terminal (2), and an electronic-monetary-claim recording institution terminal through an internet, the method **characterized by** comprising:
performing, by the bridge service terminal (A), factoring management processing including the steps of:
performing data management of a monetary claim ledger, a discount statement, monetary claim transfer through the factoring company terminal based on monetary claim statement data transmitted from the ordering company terminal (1);
transmitting generation record/transfer record request data to an electronic-monetary-claim recording institution (C) ;
recording an electronic record number and an electronic record date on the monetary claim ledger based on a record result notification transmitted from the electronic-monetary-claim recording institution (C); and
creating transfer data according to an application for prepayment received from a supplying company and generating of an accounting slip based on a discounted acquisition value, wherein
the ordering company terminal (1), the factoring company terminal, and the electronic-monetary-claim recording institution terminal are enabled to transmit and receive data by a WEB: I/F function unit of the bridge service terminal (A),
the data management of the monetary claim transfer by the bridge service terminal (A) includes the steps of:
transmitting a monetary claim purchase application from the factoring company terminal to the ordering company terminal (1) ;
transmitting a monetary claim purchase acceptance notification from the ordering company terminal (1) to the factoring company terminal;
performing execution processing of monetary claim transfer from the factoring company terminal and generating an accounting slip based on a discounted transfer value;
transmitting transfer record/payment record request data to the electronic-monetary-claim recording institution terminal; and
extinguishing an electronically-recorded debt of an ordering company on the monetary claim ledger based on the record result notification transmitted from the electronic-monetary-claim recording institution terminal and transmitting a monetary claim extinguishment notification to the ordering company terminal (1), and
the supplying company terminal (2) transmits a prepayment application to a Fax: I/F function unit of the bridge service terminal from a date when an account receivable is fixed and an electronically-recorded monetary claim is recorded so as to enable capitalization before a due date.
